(19) Europäisches Patentamt
European Patent Office
Office européen des brevets

(11) **EP 4 078 959 B1**

(12) **FASCICULE DE BREVET EUROPEEN**

(45) Date de publication et mention
de la délivrance du brevet:
**30.07.2025 Bulletin 2025/31**

(21) Numéro de dépôt: **20845590.7**

(22) Date de dépôt: **16.12.2020**

(51) Classification Internationale des Brevets (IPC):
*H04N 19/172* (2014.01)   *H04N 19/176* (2014.01)
*H04N 19/90* (2014.01)    *G06T 17/00* (2006.01)
*G06T 9/00* (2006.01)     *H04N 19/59* (2014.01)

(52) Classification Coopérative des Brevets (CPC):
**H04N 19/90; G06T 9/001; H04N 19/172;**
**H04N 19/176; H04N 19/59;** G06V 10/44

(86) Numéro de dépôt international:
**PCT/FR2020/052464**

(87) Numéro de publication internationale:
**WO 2021/123617 (24.06.2021 Gazette 2021/25)**

(54) **PROCEDE D'ENCODAGE D'UNE IMAGE NUMERIQUE EN VUE DE SA COMPRESSION**

VERFAHREN ZUM CODIEREN EINES DIGITALEN BILDES, UM DASSELBE ZU KOMPRIMIEREN

METHOD FOR ENCODING A DIGITAL IMAGE IN ORDER TO COMPRESS SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914826**

(43) Date de publication de la demande:
**26.10.2022 Bulletin 2022/43**

(73) Titulaire: **Shadow**
**75002 Paris (FR)**

(72) Inventeurs:
• **DARSCH, Amaury**
**56100 LORIENT (FR)**
• **CLARTÉ, Lucas**
**93220 GAGNY (FR)**

(74) Mandataire: **BCF Global**
**17-21, rue Saint-Fiacre**
**75002 Paris (FR)**

(56) Documents cités:
• MARWOOD DAVID ET AL: "Representing Images in 200 Bytes: Compression via Triangulation", 2018 25TH IEEE INTERNATIONAL CONFERENCE ON IMAGE PROCESSING (ICIP), IEEE, 7 October 2018 (2018-10-07), pages 405 - 409, XP033454964, DOI: 10.1109/ICIP.2018.8451393
• CHITTAJALLU DEEPAK ROY ET AL: "Vectorized persistent homology representations for characterizing glandular architecture in histology images", 2018 IEEE 15TH INTERNATIONAL SYMPOSIUM ON BIOMEDICAL IMAGING (ISBI 2018), IEEE, 4 April 2018 (2018-04-04), pages 232 - 235, XP033348140, DOI: 10.1109/ISBI.2018.8363562
• GUNNAR CARLSSON ET AL: "On the Local Behavior of Spaces of Natural Images", INTERNATIONAL JOURNAL OF COMPUTER VISION, KLUWER ACADEMIC PUBLISHERS, BO, vol. 76, no. 1, 30 June 2007 (2007-06-30), pages 1 - 12, XP019557769, ISSN: 1573-1405, DOI: 10.1007/S11263-007-0056-X
• CUADROS-VARGAS A J ET AL: "Generating Segmented Quality Meshes from Images", JOURNAL OF MATHEMATICAL IMAGING AND VISION, KLUWER ACADEMIC PUBLISHERS, BO, vol. 33, no. 1, 27 June 2008 (2008-06-27), pages 11 - 23, XP019679313, ISSN: 1573-7683

EP 4 078 959 B1

- BURKHARD LEHNER ET AL: "Image Compression Using Data-Dependent Triangulations", 26 November 2007, ADVANCES IN VISUAL COMPUTING; [LECTURE NOTES IN COMPUTER SCIENCE], SPRINGER BERLIN HEIDELBERG, BERLIN, HEIDELBERG, PAGE(S) 351 - 362, ISBN: 978-3-540-76857-9, XP019083513

## EP 4 078 959 B1

**Description**

**DOMAINE DE L'INVENTION**

La présente invention concerne un procédé d'encodage d'une image numérique, ou d'une séquence d'images numériques, en vue de sa compression.

**ARRIERE PLAN TECHNOLOGIQUE DE L'INVENTION**

Par souci de clarté, on rappelle qu'une image brute est usuellement représentée numériquement par des données appelées « pixels » disposés en matrices, selon donc une largeur et une longueur de l'image, chaque pixel associant un point de l'image à au moins une valeur d'intensité de niveau de gris ou de couleur (génériquement désignée intensité de couleur dans la suite de cet exposé). Cette représentation d'une image brute n'est pas économe en quantité de données, et il est souvent recherché d'encoder cette image brute pour la représenter numériquement sous un format de données plus compact, par exemple pour son stockage ou sa transmission.

Les procédés connus d'encodage d'images numériques sont fondés sur une combinaison de techniques qui opèrent sur une image (« intra-frame encoding », selon l'expression anglo-saxonne consacrée) et sur les relations qui existent entre plusieurs images successives (« inter-frame encoding »).

Ces techniques décomposent usuellement une image numérique en macro blocs de pixels, appliquent sur ces macro blocs des transformations d'espace de représentation, telles que des transformations de Fourier, en ondelette ou en cosinus discret, pour ne conserver que les coefficients perceptuellement significatifs.

Le document « Representing image in 200 bytes : compression via triangulation » de D. Marwood et al, IEEE ICIP 2018, (arXiv:1809.02257) propose une autre approche d'encodage selon laquelle une image numérique est décomposée en triangles. Le sommet de chaque triangle correspond à un pixel de l'image brute d'origine dont il hérite de l'intensité de couleur. En exploitant les propriétés d'un pavage standard de l'image, par exemple par une triangulation de Delaunay, l'image encodée peut être simplement représentée par la liste des sommets. Lors du décodage, l'image peut être recomposée, pixel par pixel, par interpolation de l'intensité de couleur entre les sommets des triangles, ceux-ci ayant pu être reconstitués à partir de la liste des sommets. La problématique dans cette approche est de choisir le nombre de triangles et de positionner les sommets des triangles pour, à un taux de compression donné, minimiser la dégradation de l'image reconstituée vis-à-vis de l'image brute d'origine.

On note qu'un encodage par triangulation d'une image est particulièrement intéressant lorsque cette image est destinée à être décodée par un ordinateur moderne. Celui-ci dispose effectivement d'une carte ou d'une puce graphique qui est conçue pour traiter très efficacement, en pipeline, des triangles afin de reconstituer des images. De ce point de vue, un procédé de décodage par triangulation peut être très facilement et efficacement mis en œuvre.

Intuitivement, on comprend que selon cette approche d'encodage, on cherche à placer une plus grande densité de triangles dans des zones de l'image les plus riches, afin de pouvoir recomposer l'image dans ces zones avec plus de finesses. Pragmatiquement, l'article précité propose plusieurs méthodes, systématiques ou stochastiques, pour encoder par triangulation une image numérique en vue de sa compression.

La présente invention propose un procédé alternatif d'encodage par triangulation d'une image numérique, qui s'appuie sur les principes de la topologie algorithmique. Cette branche scientifique et technique a fait l'objet de nombreuses publications et on pourra par exemple se référer à l'ouvrage « Computational Topology: An Introduction » par H. Edelsbrunner and J. Harer, AMS Press, 2009.

L'invention est définie par les revendications.

**BRÈVE DESCRIPTION DE L'INVENTION**

En vue de la réalisation de l'un de ces buts, l'objet de l'invention propose un procédé d'encodage d'une image numérique tel que revendiqué dans la revendication indépendante 1.

D'autres caractéristiques avantageuses sont définies dans les revendications dépendantes 2-5.

Selon un autre aspect, l'invention propose un programme d'ordinateur comprenant des instructions adaptées à la mise en œuvre de chacune des étapes du procédé d'encodage qui vient d'être présenté, lorsque le programme est exécuté sur un ordinateur.

Selon encore un autre aspect, l'invention propose un encodeur configuré pour mettre en œuvre le procédé d'encodage.

L'invention est définie par les revendications.

3

## BREVE DESCRIPTION DES DESSINS

D'autres caractéristiques et avantages de l'invention ressortiront de la description détaillée de l'invention qui va suivre en référence aux figures annexées sur lesquels :

[Fig. 1] La figure 1 représente le contexte d'un procédé conforme à l'invention ;
[Fig. 2] la figure 2 représente les étapes principales d'un procédé conforme à l'invention ;
[Fig. 3a]
[Fig. 3b]
[Fig. 3c]

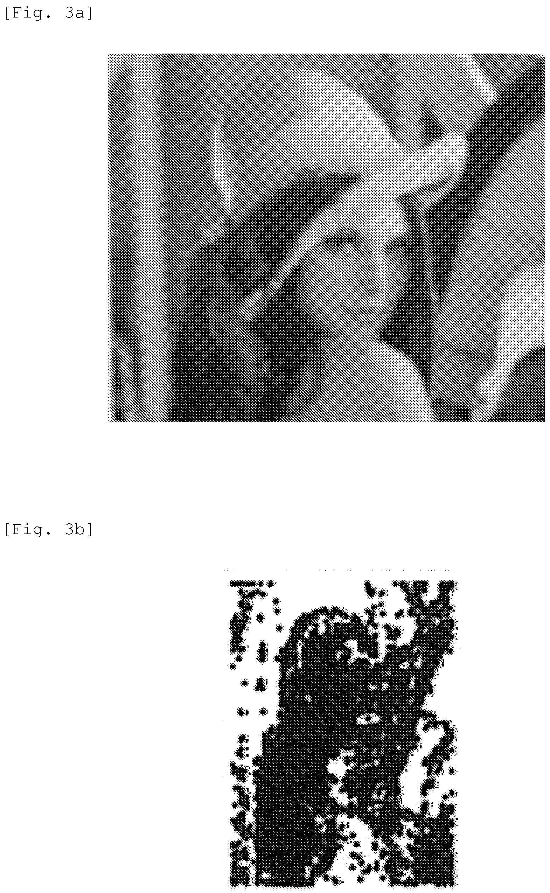

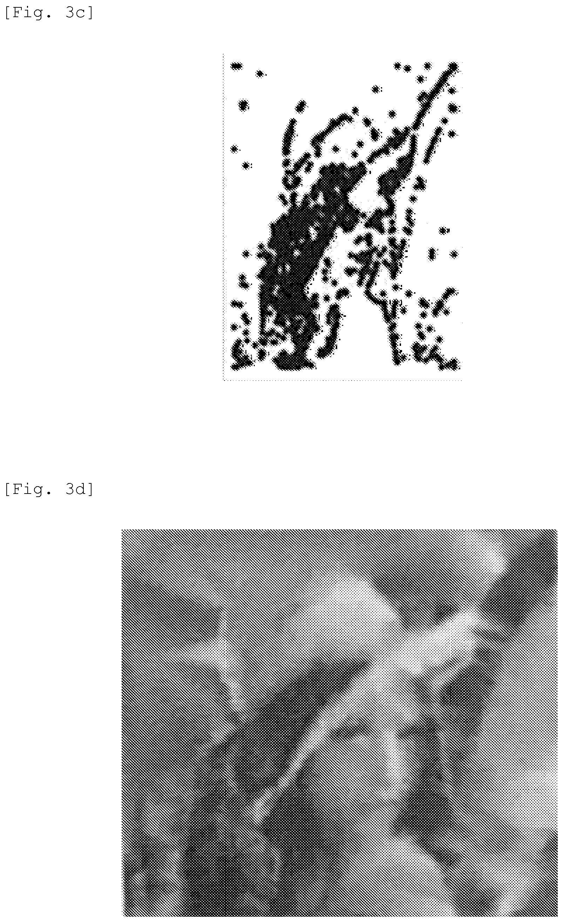

[Fig. 3d] les figures 3a, 3b, 3c et 3d représentent respectivement une image brute d'origine, les sommets dans cette image choisis dans une étape intermédiaire d'un procédé conforme à l'invention, les sommets choisis dans cette image à l'issus de l'étape de décimation, et une image recomposée à partir de ces sommets ;

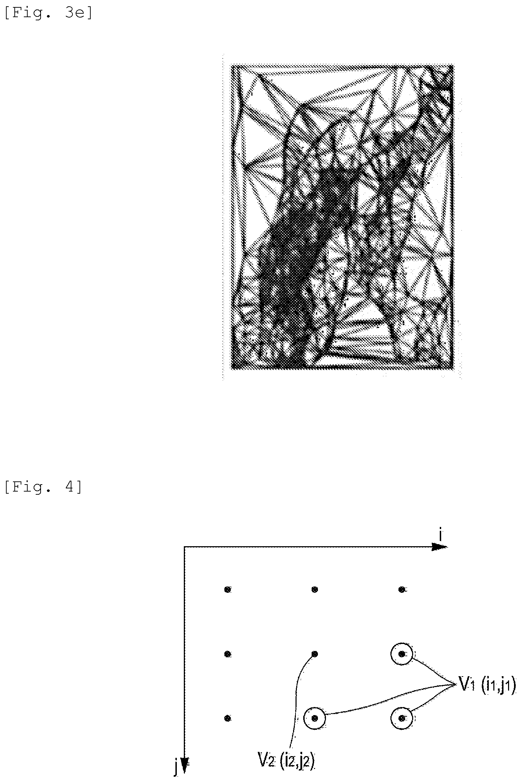

[Fig. 3e] la figure 3e représente un exemple de triangulation réalisable par un encodeur à partir des sommets de la figure 3c.
[Fig. 4] la figure 4 représente une relation de voisinage exploitée dans un mode de mise en œuvre d'une étape de filtration d'un procédé conforme à l'invention ;

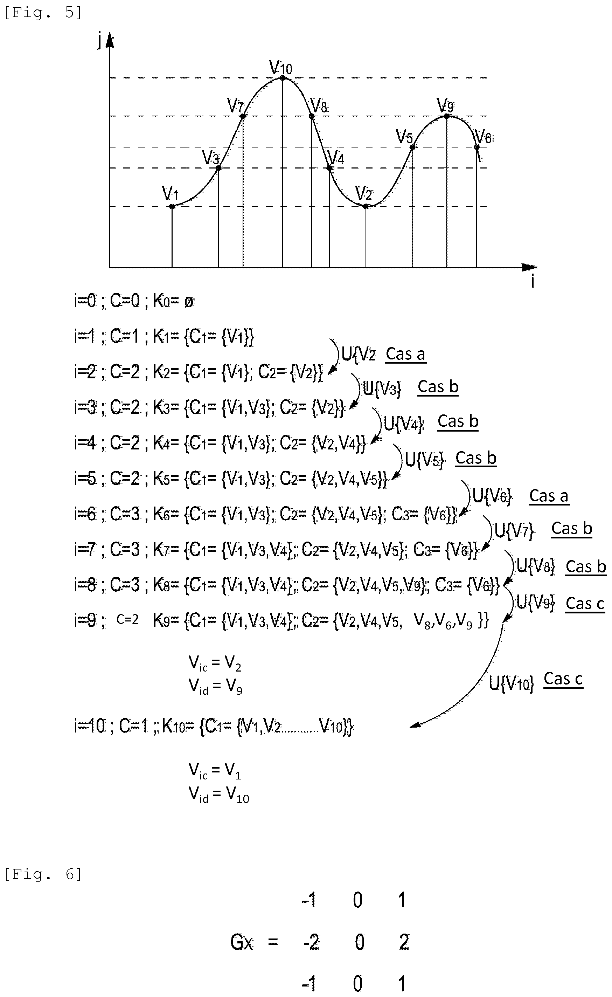

[Fig. 5] la figure 5 représente une séquence d'étapes résultant de l'application, sur une image simplifiée, d'un exemple particulier d'un procédé d'encodage conforme à l'invention.
[Fig. 6] la figure 6 représente la matrice Gx d'un filtre de Sobel.

## DESCRIPTION DETAILLEE DE L'INVENTION

La présente invention propose un procédé d'encodage d'une image numérique en vue de sa compression. Plus précisément, l'encodage vise à établir des données de triangulation de l'image et met en œuvre pour cela les principes de la topologie algorithmique et notamment la technique de l'homologie persistante.

Avant d'entrer dans le détail de ce procédé, on précise que celui-ci est destiné à être mis en œuvre par un encodeur, qui peut être matériel ou logiciel.

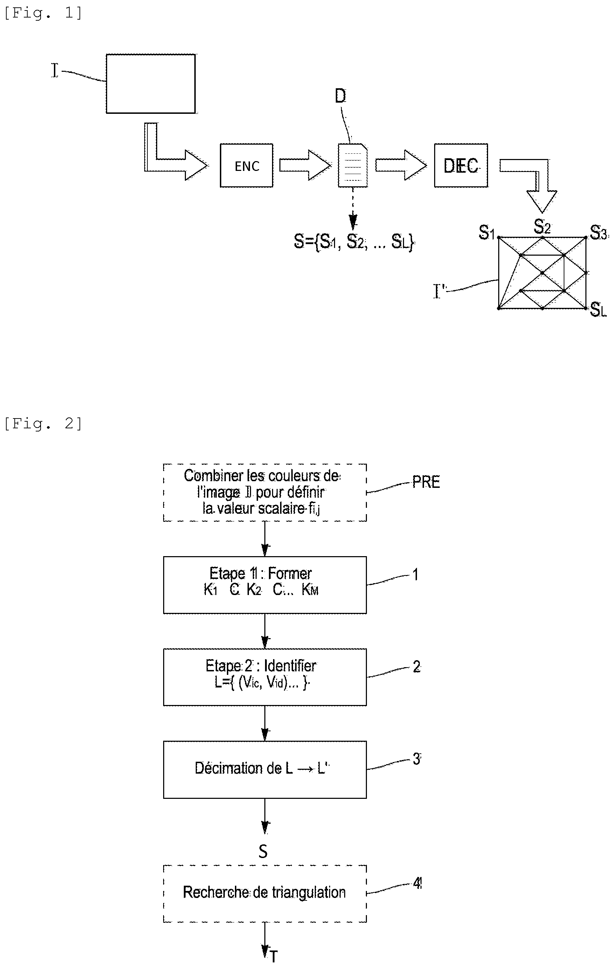

Comme cela est représenté sur la figure 1, on fournit à l'encodeur ENC une image numérique brute I, sous la forme d'une matrice de pixels. Cette image numérique brute I peut être définie en niveau de gris ou en couleurs, et chaque pixel comprend alors la donnée numérique de niveau de gris ou les données numériques d'intensité de couleurs, par exemple en RGB, comme cela est bien connu en soi.

L'encodeur ENC fournit en sortie des données de triangulation D, ici représenté sous la forme d'un fichier informatique. Il peut s'agir d'une liste de triangles respectivement définis par les coordonnées des 3 sommets dans l'image brute originale I (par exemple en indice i,j de pixel), chaque sommet étant associé aux données numériques d'intensité de couleur (ou à la donnée numérique de niveau de gris). Mais avantageusement, l'encodeur s'appuie sur un pavage standard, par exemple une triangulation de Delaunay, et les données de triangulation peuvent alors simplement être formées de la liste S des sommets $\{s_1, s_2,..., s_L\}$ comme cela est représenté sur la figure 1, associés aux données numériques d'intensité de couleur.

Les données de triangulation D peuvent elles-mêmes subir un encodage de compression de données numériques, par exemple un encodage sans perte du type ANS (Asymetric Numeral System). Cette opération (non représentée sur la figure 1) peut être réalisée par l'encodeur ENC ou par un autre dispositif ou programme. Que ces données D aient été compressées ou pas, elles représentent la version encodée (c'est-à-dire compressée) de l'image brute I d'origine. Cette version peut être contenu dans un fichier informatique pour être enregistrée sur un support informatique ou directement transmise par l'intermédiaire d'un réseau.

Pour exploiter l'image encodée, les données de triangulation sont fournies à un décodeur DEC qui, similairement à l'encodeur ENC, peut prendre une forme matérielle ou logicielle. Celui-ci réalise, si cela est nécessaire, la décompression des données numériques reçues pour rétablir les données de triangulation D. Lorsque ces données D sont constituées d'une simple liste S de sommets $\{s_1, s_2,..., s_L\}$, le décodeur DEC reconstitue ces triangles selon la méthode de pavage sélectionnée, une triangulation de Delaunay dans l'exemple pris ci-dessus.

Pour reconstituer une image I', le décodeur DEC recalcule chacun de ses pixels par interpolation à partir des triangles reconstitués à partir de la liste S de sommets $\{s_1, s_2,..., S_L\}$ et des données numériques d'intensité de couleur associé à chacun de ces sommets.

Principe général du procédé d'encodage

Comme cela a été précisé en introduction de cette demande, la présente invention propose un procédé d'encodage par triangulation d'une image numérique I, qui s'appuie sur les principes de la topologie algorithmique.

Les étapes de ce procédé sont représentées sur la figure 2.

Dans une telle approche, l'image numérique I est vue comme un nuage de points $(i, j, f_{ij})$ associant les N pixels d'indices $(i, j)$ de l'image à une valeur scalaire d'intensité $f_{ij}$.

Cette intensité peut être un niveau de gris ou un niveau de luminance. Lorsque l'image brut I d'origine est en couleur, par exemple avec trois niveaux de couleurs définis par des composantes RGB pour chaque pixel $p_{ij}$, on peut traiter cette image, au cours d'une étape de traitement préliminaire PRE, afin de combiner entre elles les valeurs selon les composantes RGB et associer au pixel $p_{ij}$ une valeur scalaire, appelée dans cette demande valeur scalaire d'intensité $f_{ij}$. De manière préférée, cette combinaison assure que deux couleurs proches dans l'image brut I d'origine soit transformées en des valeurs scalaires d'intensité également proches. On donnera un exemple détaillé d'une telle combinaison dans un passage ultérieur de la demande.

On désignera dans la suite de cet exposé les points de l'image comme des sommets, afin de se conformer à la terminologie généralement employée dans le domaine de la topologie algorithmique.

Dans une première étape 1 d'un procédé d'encodage conforme à l'invention, on forme une filtration du nuage de points. Cette filtration est composée d'une série de complexes simpliciaux $K_i$, chaque complexe simplicial correspondant à une structure de données associant une pluralité de sommets $v_k$ entre eux.

Par définition, dans une filtration, les complexes simpliciaux sont ordonnés entre eux, de sorte qu'un complexe de rang i est inclus dans les complexes de rangs supérieurs à i. En d'autres termes, les sommets $v_k$ associés entre eux dans un complexe simplicial $K_i$ présentant un rang déterminé i sont également associés entre eux dans les complexes simpliciaux présentant respectivement des rangs supérieurs au rang déterminé i.

À l'aide d'une filtration, on peut décomposer l'image numérique I à encoder (le nuage de points) en sous-ensembles du nuages inclus les uns dans les autres. Cette décomposition peut être faite de nombreuses manières. Il peut s'agir par exemple d'une filtration dite « Lower Star », dont on donnera un exemple particulièrement simple à mettre en œuvre dans une seconde partie de cet exposé. Toutefois, cette décomposition n'est pas quelconque, et elle doit assurer que chaque sous-ensemble présente bien les propriétés d'un complexe simplicial afin de pouvoir tirer profit des outils disponibles dans le domaine de la topologie algorithmique. Il peut ainsi s'agir d'une filtration de Cech ou d'une filtration de Vietoris-Rips.

Dans une deuxième étape 2 d'un procédé d'encodage on cherche à identifier et à caractériser des structures topologiques au sein de la filtration. Ces structures topologiques, dans le cas d'une image et donc dans l'univers à 3 dimensions du nuage de points, peuvent par exemple correspondre à une composante connexe, i.e. un amas de points dans le nuage, ou à un trou, i.e. une absence de points dans une zone particulière du nuage.

On cherche ainsi à déterminer dans la filtration le rang à partir duquel de telles structures topologiques apparaissent, et le rang à partir duquel ces structures disparaissent. On cherche également à déterminer dans la filtration les sommets d'apparition et de disparition de ces structures. L'idée sous-jacente à cette analyse est qu'une structure topologique qui présente une durée de vie relativement importante dans la filtration (c'est-à-dire que la différence entre son rang d'apparition et de disparition dans la filtration est relativement importante) est une structure topologique remarquable, qui « structure » l'image. Cette structure topologique pourra être approximée de manière performante lors de la phase de décodage, par interpolation entre les sommets transmis. Inversement, une structure topologique ayant une durée de vie relativement courte dans la filtration est une structure topologique d'importance moindre, un détail de l'image.

Un des principes sous-tendant le procédé d'encodage de l'invention est de ne retenir que les structures topologiques remarquables pour fournir une version compressée de l'image numérique I. Les structures topologiques d'importance moindre peuvent être omises sans excessivement dégrader la qualité perçue de l'image.

Pour réaliser cette analyse, un procédé conforme à l'invention traite au cours de la deuxième étape 2 une partie au moins des complexes simpliciaux $K_i$ pour identifier des paires de persistance $(v_{ic}, v_{id})$, et former une liste L de paires de persistance $\{(v_{ic}, v_{id}), ...\}$. Une paire de persistance correspond à une paire de sommets composée d'un premier et d'un second sommet $v_{ic}, v_{id}$, le premier sommet $v_{ic}$ correspondant au sommet d'apparition d'une structure dans la filtration et le second sommet $v_{id}$ de la paire correspondant au sommet de disparition de la structure topologique dans la filtration.

La durée de vie de cette paire de persistance $(v_{ic}, v_{id})$ correspond à la différence entre le rang ic du complexe simplicial $K_{ic}$ dans lequel apparaît la structure topologique et le rang id du complexe simplicial $K_{id}$ dans lequel disparaît la structure topologique.

Le procédé conforme à l'invention exploite les paires de persistance de la filtration identifiées au cours de la deuxième étape 2, au cours d'une étape de dite de décimation 3.

Au cours de cette étape, on calcule pour chaque paire de persistance $(v_{ic}, v_{id})$ identifiée dans la filtration au cours de la deuxième étape 2, la durée de vie de la structure topologique, c'est-à-dire que l'on calcule la différence de rang entre le rang id du second sommet $v_{id}$ et le rang ic du premier sommet $v_{ic}$. Et on retient dans une liste restreinte L' une partie seulement des paires de persistances de la liste L crée au cours de la deuxième étape 2, cette partie étant composée de paires présentant les durées de vie les plus grandes.

La sélection des paires de persistance selon ce critère peut se faire de multiples manières. On peut par exemple choisir de retenir un nombre prédéterminé de paires, les « P » paires de durée de vie les plus grandes. On peut alternativement choisir de retenir un pourcentage prédéterminé de ces paires, les « P% » de paires présentant la durée de vie la plus longue. On peut encore choisir les paires présentant une durée de vie supérieure à un seuil prédéterminé.

Selon l'invention, les paires de persistance retenues dans la liste restreinte L', c'est à dire les sommets d'apparition $v_{ic}$ et les sommets de disparition $v_{id}$ des paires de persistance qui constituent la liste restreinte L' forment les sommets de triangulation S. Bien entendu, plus l'étape de décimation sera sévère, c'est-à-dire plus le nombre de paires de persistance retenues dans la liste restreinte L' sera petit, plus le taux de compression de l'image sera important, au détriment bien sûr de la qualité perçue de l'image reconstituée.

Dit autrement, l'invention propose de retenir comme sommets de triangulation $\{s_1, s_2,..., s_L\}$ d'une image I, les sommets d'apparition $v_{ic}$ et de disparition $v_{id}$ des structures topologiques présentant les durées de vie les plus longues dans la filtration.

Comme on l'a déjà dit, ces structures topologiques sont celles qui définissent au mieux structurellement l'image, et l'invention propose donc de retenir comme sommet de triangulation les sommets d'apparition et de disparition de ces structures.

Pour encoder l'image I en vue de sa compression, on dispose donc dans un fichier informatique D les seuls pixels $p_{ij}$ de l'image brut d'origine I correspondant aux sommets de triangulation S retenus, c'est à dire les indice i, j et le niveau d'intensité $p_{ij}$ des de ces pixels. Ce fichier D peut être enregistré sur un support ou transmis directement.

Comme on l'a mentionné précédemment, ce fichier informatique D peut être suffisant à lui seul, et le décodeur DEC construira les triangles à partir de la liste S des sommets fournie, selon un protocole préétabli ou choisi arbitrairement. Il peut ainsi s'agir d'une triangulation de Delaunay. Alternativement, le fichier D peut comprendre une section désignant la méthode de triangulation à employer.

On peut également choisir d'ajouter arbitrairement des pixels dans le fichier D pour favoriser une triangulation homogène ou régulière de l'image : on peut ainsi choisir d'ajouter les pixels formant les 4 coins de l'image I, ou des pixels répartis sur le pourtour de l'image I ou encore en grille sur l'image.

Alternativement encore, le procédé peut comprendre une étape complémentaire 4 de recherche d'une triangulation à partir des sommets retenus S. En effet, il existe de très nombreuses manières de former des triangles à partir d'une simple liste S de sommets. Certaines de ces solutions ne conduisent pas forcément à une image reconstituée I' de bonne qualité, ou ne conduisent pas forcément à un temps de traitement de décodage raisonnable. On peut donc dans certains cas prévoir une étape de triangulation 4 du côté de l'encodeur cherchant à établir une liste de triangles T ou des informations permettant d'établir une telle liste conduisant à une qualité d'image ou à une vitesse de décodage satisfaisante.

Dans le cas le plus complet, cette étape de triangulation 4 d'un procédé conforme à l'invention fournit une liste T de triangles d'une triangulation favorable (en temps de traitement, en qualité d'image) et le fichier compressé D de l'image est alors constitué des triangles définis par leurs pixels de sommets (c'est-à-dire les coordonnées du sommet et des informations de couleurs).

Dans une variante, l'étape de triangulation 4 établi un paramètre d'une méthode de triangulation connue du décodeur, et le fichier informatique D de l'image compressée contient alors la valeur de ce paramètre pour qu'elle soit employée par le décodeur DEC.

Dans une autre variante, l'étape de triangulation 4 fournit une indication sommaire qui peut être employée du côté du décodeur DEC pour guider ce travail de reconstitution de triangle. Il peut par exemple s'agir de recommander au décodeur DEC de former un nombre prédéterminé de triangles, indépendamment de la méthode de triangulation mise en œuvre.

<u>Exemple détaillé</u>

On donne maintenant un exemple détaillé du procédé d'encodage d'une image I qui vient d'être présenté de façon générale. Cet exemple forme également un mode préféré de mise en œuvre de ce procédé.

On dispose d'une image en couleur RGB représentée sur la figure 3a, ici d'une image présentant une résolution de 220 pixels en hauteur et de 220 pixels en largeur. Chacun des 48 400 pixels est donc associé à un vecteur formé de trois niveaux respectivement de rouge, de vert, et de bleu. On pourrait tout naturellement appliquer la méthode à une image couleur encodée dans un autre espace couleur que l'espace RGB choisi ici.

<u>Valeur scalaire d'intensité</u>

Pour définir une valeur scalaire $f_{ij}$ à chaque pixel $p_{ij}$ de l'image, on applique un premier filtre de Sobel $G_x$ à l'image, le filtre étant défini par la matrice de la figure 6.

Le filtre s'applique aux vecteurs de couleurs des pixels de l'image, et fournit donc un nouveau vecteur pour chacun des pixel $p_{ij}$, à partir du vecteur de couleur des pixels adjacents $p_{i-1j}$, et $p_{i+1j}$.

On applique similairement un second filtre de Sobel $G_y$, qui est défini par la matrice transposée de $G_x$ qui s'applique sur les vecteurs de couleurs du pixel $p_{ij}$ et de ses pixels adjacents selon l'indice j.

La valeur scalaire $f_{ij}$ associée par un pixel $p_{ij}$ est définie par la somme de la norme carrée du vecteur Gx. ($p_{i-1j}$, $p_{ij}$,$p_{i+1j}$) et de la norme carré du vecteur Gy. ($p_{ij-1}$, $p_{ij}$,$p_{ij+1}$) associé au pixel $p_{ij}$ :

$$\mathtt{f_{ij}\ =\ norme\,(Gx.\,(p_{i-1j},p_{ij},p_{i+1j}))\,{}^{\wedge}2+norme\,(Gy.\,(p_{ij-1},p_{ij},p_{ij+1}))\,{}^{\wedge}2}$$

### Ordonnancement des sommets dans une table de sommet

On désigne maintenant par sommet v, les 48 400 pixels $p_{ij}$ de l'image. Chaque sommet v peut donc être associé à une grandeur scalaire d'intensité $f_{ij}$, pour former un nuage de points. On forme une table des 48 400 sommets, en ordonnant ces sommets v dans la table par ordre croissant de leurs valeurs scalaires d'intensité $f_{ij}$.

Il est bien entendu possible que deux sommets $v_k$, $v_{k'}$ présentent des valeurs d'intensité identiques. Dans ce cas, on peut appliquer la règle suivante : le sommet $v_k$ associé à un pixel $p_{ij}$ d'indice i et j est positionné dans la table de sommets en amont d'un sommet $v_{k'}$ associé à un pixel $p_{i'j'}$ d'indice i' et j', si i<i' ou, dans le cas où i=i', si j<j'. Dans le cas contraire, le sommet $v_{k'}$ est positionné en amont du pixel $v_k$ dans la table de sommets. Toute autre règle d'ordonnancement peut naturellement convenir.

En conséquence, dans la table de sommets, un sommet de rang k, noté $v_k$, est associé à une valeur scalaire d'intensité $f_k$ inférieure ou égale à la valeur scalaire d'intensité $f_{k'}$ d'un sommet $v_{k'}$ de rang k' supérieur au rang k.

### Voisinage d'un sommet

L'algorithme de filtration du présent exemple fait appel à une relation de voisinage d'un sommet qui peut être définie librement, tout en étant compatible avec les objets utilisés dans la topologie algorithmique, et notamment les complexes simpliciaux. Ce voisinage forme une relation d'équivalence sur l'ensemble formé de la table de sommets.

Dans le cas de ce mode préféré de mise en œuvre, un premier sommet $v_1$, correspondant à un pixel d'indices i1, j1 de l'image numérique, est dans le voisinage d'un second sommet $v_2$, correspondant à un pixel d'indices i2, j2 de l'image numérique, si i1=i2+1 et/ou si j1=j2+1. Cette relation de voisinage est illustrée sur la figure 4.

### Filtration

On rappelle que la filtration vise à former une série de complexes simpliciaux $K_i$, chaque complexe simplicial $K_i$ correspondant à une structure de données associant une pluralité de sommets v entre eux. Dans le mode préféré de mise en œuvre, la filtration est une filtration « Lower Star » et on construit autant de complexes simpliciaux $K_i$ que de sommets dans la table de sommets (soit autant que de nombre de pixels N dans l'image). Cette filtration présente l'avantage d'être linéaire en complexité de calcul avec le nombre de points du nuage. Elle évite de construire le complexe simplicial du nuage de points lui-même, et établit directement les complexes simpliciaux de la filtration. Elle fait apparaître naturellement les invariants topologiques associés aux complexes simpliciaux de la filtration. Chaque complexe simplicial $K_i$ est composé d'au moins une classe C, chaque classe C regroupant des sommets liés entre eux par la relation de voisinage. Il s'agit donc de classes d'équivalence.

Dans une phase d'initialisation de cette première étape de filtration du procédé, on initialise un indice d'itération i et un indice de classe c à 0, on initialise un complexe simplicial de départ $K_0$ à un ensemble vide.

Puis, on répète la séquence des opérations suivantes jusqu'à ce que l'indice d'itération i atteigne le nombre de sommets, ici 48 400 :

- incrémenter l'indice d'itération i ;

- extraire le sommet $v_i$ de rang i de la table des sommets et vérifier si ce sommet de rang i est dans le voisinage d'un sommet compris dans le complexe simplicial $K_{i-1}$ de rang i-1.

On repère ces sommets du complexe simplicial $K_{i-1}$ dans le voisinage du sommet $v_i$, et suivant le cas, on définit le complexe simplicial $K_i$ de rang i de la manière suivante :

- cas a : si aucun sommet du complexe simplicial $K_i$ de rang i n'est dans le voisinage du sommet vi de rang i, on incrémente alors le rang de classe c, et on former le complexe simplicial $K_i$ de rang i en ajoutant, au complexe simplicial $K_{i-1}$ de rang i-1, une nouvelle classe C composée du sommet vi de rang i. On affecte le rang c à cette nouvelle classe C.

- cas b : si au moins un sommet d'une unique classe du complexe simplicial $K_i$ de rang i est dans le voisinage du sommet vi de rang i, on forme le complexe simplicial $K_i$ de rang i en ajoutant, au complexe simplicial $K_{i-1}$ de rang i-1, le sommet $v_i$ de rang i dans cette unique classe ;

- cas c : enfin, si plusieurs sommets d'une pluralité de classes du complexe simplicial $K_i$ de rang i sont dans le voisinage du sommet vi de rang i, on forme le complexe simplicial Ki de rang i en regroupant entre eux, dans le complexe simplicial $K_{i-1}$ de rang i-1, les sommets formant cette pluralité de classes et le sommet $v_i$ de rang i dans la classe de rang le plus faible. On décrémente alors le rang de classe c pour refléter la disparition de la classe (ou des classes).

On note que chaque complexe simplicial est composé d'au moins une classe, et généralement d'une pluralité de classes. Ces classes regroupent les sommets liés par la relation de voisinage. Deux classes de sommets regroupent des sommets distincts les uns des autres, chacune de ces classes formant en quelque sorte une structure topologique de type composante connexe. Le nombre de classes dans un complexe simplicial donne, en termes de topologie algorithmique, le nombre de Betti d'ordre 0, c'est-à-dire un invariant topologique.

Deuxième étape d'établissement des paires de persistance

À partir de la filtration qui vient d'être construite, on peut facilement déterminer des paires de persistance de la manière suivante.

On se place dans le cas c, évoqué ci-dessus, c'est-à-dire que l'on a regroupé à l'occasion d'une itération d'indice i les sommets formant une pluralité de classes entre eux dans la classe de rang le plus faible de cette pluralité.

Une paire de persistance peut être alors établie comme le couple formé :

- du premier sommet $v_{ic}$ correspondant au sommet de rang le plus petit dans la classe de rang le plus faible, ce rang étant appelé rang d'apparition ic de la paire de persistance ;
- du second sommet $v_{id}$ correspondant au sommet de rang d'indice i, ce rang i étant appelé rang id de disparition de la paire de persistance.

Une paire de persistance correspond donc au couple de sommets comprenant le premier sommet $v_{ic}$ auquel une structure topologique (une classe) se crée dans la filtration, et comprenant le second sommet $v_{id}$ auquel cette structure topologique (une classe) disparaît dans la filtration.

L'établissement des paires de persistance peut être réalisé à l'issue de la première étape conduisant à la création de la filtration, mais plus simplement il peut être réalisé à chaque itération de la séquence composant cette première étape, dans la mesure ou le cas c se produit.

À titre d'illustration de ces mécanismes on a représenté sur la figure 5, une image à une dimension composée de 10 pixels, formant donc 10 sommets ordonnés par grandeur croissante de leur valeur d'intensité f de $v_1$ à $v_{10}$.

Dans la liste sous l'image simplifiée de cette figure, on a déroulé l'algorithme présenté à partir de l'étape d'initialisation pour laquelle i=0, jusqu'à une étape terminale pour laquelle i=10.

À chaque itération i, on ajoute dans le complexe simplicial Ki, le sommet selon l'un des cas a, b ou c décrit précédemment.

On observe que jusqu'à l'itération 8, on crée de nouvelles classes $c_1$, $c_2$, $c_3$ à l'aide des sommets $v_i$, ou on ajoute ce sommet à une classe préexistante selon l'un des cas a ou cas b.

À l'itération 9, le sommet $v_9$, dans le voisinage des sommets $v_5$ et $v_6$ respectivement contenus dans les classes $c_2$ et $c_3$, conduit à exécuter le cas c de la première étape. Les classes $c_2$ et $c_3$ fusionnent au sein de la classe $c_2$ dans laquelle on ajoute également le sommet $v_9$. La disparition d'une classe conduit à exécuter la deuxième étape du procédé, et à créer une paire de persistance dont le premier sommet est $v_2$ (création de la classe de plus petit rang 2) et le second sommet est $v_9$ (disparition de la classe c3). La durée de vie de la structure topologique associée est donc de 7.

Le même phénomène se répète lors de la dernière itération.

Revenant à la description générale des traitements réalisés sur l'image numérique de la figure 3a, les traitements réalisés au cours des première et deuxième étapes qui viennent d'être présentées conduit à déterminer une liste de paires de persistance, qui définissent des sommets d'intérêt de cette image. La figure 3b représente dans le plan l'image la position de ces sommets, qui peuvent être de plusieurs milliers.

*Étape* de *décimation*

Cette étape nécessite de déterminer la durée de vie d'une structure topologique. Cette durée de vie est associée à une paire de persistance ($v_{ic}$, $v_{id}$) et est calculée comme la différence entre le rang id de disparition de la paire de persistance et le rang ic d'apparition de la paire de persistance.

Comme on l'a indiqué dans la description générale de l'invention, cette durée de vie est déterminée pour chaque paire de persistance. Puis, on retient dans la liste restreinte une partie des paires de persistances présentant les durées de vie les plus grandes. Dans cet exemple de mise en œuvre on a retenu de l'ordre de 11% des paires dont la durée de vie est la plus grande.

Les sommets de triangulation sont définis comme tous les sommets constituant les paires de persistances de la liste restreinte. La figure 3c représente dans le plan image la position de ces sommets. Ces sommets de triangulation forment dans cet exemple les données fournis par l'encodeur, après qu'ils aient été associés aux données RGB de couleur du pixel $p_{ij}$ auquel ces sommets correspondent. La figure 3e illustre un exemple de triangulation, qui peut être réalisé par le décodeur DEC à partir des sommets qui lui sont fournis.

On présente maintenant une variante avantageuse de ce mode préféré de mise en œuvre. On remarque tout d'abord que ce mode permet d'identifier les structures topologiques de type composantes connexes, mais ne permet pas d'identifier celles de type trou. Pour compenser cela, le procédé prévoit de répéter la première étape de filtration et la deuxième étape de détermination des paires de persistance, en prenant l'opposé des valeurs scalaires d'intensité $-f_{ij}$ associées à chaque sommet. On peut montrer que de la sorte, on est capable d'identifier les structures topologiques de type trou.

Plus précisément, il suffit de répéter les étapes présentées ci-dessus, en parcourant de manière décroissante la table des sommets, et arriver à la séquence suivante :
Dans une phase d'initialisation, on initialise l'indice d'itération i à N+1 et l'indice de classe c à 0. On initialise un complexe simplicial $K_N$ de départ à l'ensemble vide.

Puis, on répète la séquence des opérations suivantes jusqu'à ce que l'indice d'itération i atteigne 1:

- décrémenter l'indice d'itération i ;

- Extraire le sommet $v_i$ de rang i de la table de sommets et vérifier si le sommet $v_i$ de rang i est dans le voisinage d'un sommet compris dans le complexe simplicial $K_{i+1}$ de rang i+1.

On repère ces sommets du complexe simplicial $K_{i+1}$ dans le voisinage du sommet $v_i$, et suivant le cas, on définit le complexe simplicial $K_i$ de rang i de la manière suivante :

- Cas a' : si aucun sommet du complexe simplicial $K_{i+1}$ de rang i+1 n'est dans le voisinage du sommet $v_i$ de rang i, on incrémente le rang de classe c, et on forme le complexe simplicial $K_i$ de rang i en ajoutant, au complexe simplicial $K_{i+1}$ de rang i+1, une nouvelle classe $C_c$ composée du sommet vi de rang i et on affecte à cette nouvelle classe $C_c$ le rang c.

- Cas b' : si au moins un sommet d'une unique classe du complexe simplicial $K_{i+1}$ de rang i+1 est dans le voisinage du sommet $v_i$ de rang i, former le complexe simplicial Ki de rang i en ajoutant, au complexe simplicial $K_{i+1}$ de rang i+1, le sommet vi de rang i dans cette unique classe.

- Cas c' : si plusieurs sommets d'une pluralité de classes du complexe simplicial $K_{i+1}$ de rang i+1 sont dans le voisinage du sommet $v_i$ de rang i, former le complexe simplicial $K_i$ de rang i en regroupant entre eux, dans le complexe simplicial $K_{i+1}$, de rang i+1, les sommets formant cette pluralité de classes et le sommet $v_i$ de rang i dans la classe de rang le plus faible. On décrémente le rang de classe c pour refléter la disparition d'une classe.

Similairement à ce qui a été expliqué précédemment, ce dernier cas c' peut être poursuivi par la deuxième étape visant à établir les paires de persistance. Ces paires de persistance déterminées au cours de cette séquence de calcul « inverse » sont regroupées avec les paires identifiées au cours de la séquence de calcul « direct » présentée précédemment, pour former la table des paires de persistance soumise à l'étape de décimation. L'enchaînement de ces deux séquences de calcul ne présente pas d'ordre privilégié et on pourrait naturellement faire précéder la séquence de calcul « inverse » de la séquence de calcul « direct ».

Pour finir la description de cet exemple, la figure 3d représente l'image I' reconstituée par un décodeur, par interpolation entre les pixels correspondant aux sommets transmis.

Un procédé d'encodage selon l'invention peut être mis en œuvre par un dispositif matériel (un encodeur) ou par logiciel. Lorsqu'il s'agit d'un logiciel, le procédé est mis en œuvre par un ordinateur, par l'intermédiaire d'un programme d'ordinateur constitué d'instructions adaptées pour mettre en œuvre au moins chacune des étapes de ce procédé.

Le procédé d'encodage, lorsqu'il est mis en œuvre par ordinateur, organise les données manipulées par les instructions du programme sous la forme de structures de données informatiques, qui ont été désignés dans cette présente demande par les expressions « table » ou « liste ». Il va de soi que ces désignations ne sont pas destinées à limiter la manière dont les données sont effectivement organisées par le programme informatique. Et par « table » ou « liste » on désigne donc toute structure de données permettant d'accéder à une donnée enregistrée dans un espace de stockage de l'ordinateur. L'homme du métier pourra choisir la structure de données selon le besoin ou l'environnement informatique dont il dispose. Il peut ainsi s'agir de graphes, de matrices, de liste et/ou de tables permettant d'accéder directement à une donnée ou d'accéder à un pointeur de cette donnée.

Bien entendu l'invention n'est pas limitée au mode de mise en œuvre décrit et on peut y apporter des variantes de réalisation .

On pourra notamment choisir d'appliquer une méthode d'encodage conforme à l'invention sur une image complète comme cela a été présenté dans l'exemple détaillé précédent, mais alternativement on pourra réaliser cet encodage sur des macro-blocs de l'image, par exemple de 32 pixels sur 32 pixels. Cette approche présente l'avantage de permettre la parallélisation des traitements d'encodage des macro-blocs et donc de réduire la durée totale de traitement.

## Revendications

1. Procédé d'encodage d'une image numérique formée d'un ensemble de N pixels ($p_{ij}$)en vue de sa compression, l'image numérique étant définie comme un nuage de N points (i, j, $f_{ij}$), désignés sommets ($v_k$), associant l'ensemble de N pixels ($p_{ij}$) à une valeur scalaire d'intensité ($f_{ij}$), le procédé comprenant les étapes suivantes :

   a) ordonner les N sommets ($v_k$) par ordre croissant de valeurs scalaires d'intensité ($f_{ij}$) dans une table de sommets ;

   b) former une filtration du nuage de points composé d'une série de M complexes simpliciaux ($K_i$), chaque complexe simplicial correspondant à une structure de données associant une pluralité de sommets ($v_k$) entre eux, la filtration étant telle que la pluralité de sommets ($v_k$) associés par un complexe simplicial ($K_i$) présentant un rang déterminé sont également associés dans les complexes simpliciaux présentant respectivement des rangs supérieurs au rang déterminé, étape dans laquelle on initialise un indice d'itération i et un indice de classe c à 0, on initialise un complexe simplicial de départ ($K_0$) à l'ensemble vide et on répéte la séquence des opérations suivantes jusqu'à ce que l'indice d'itération i atteigne N:

      - incrémenter l'indice d'itération i ;
      - extraire le sommet de rang i ($v_i$) de la table de sommet et vérifier si le sommet de rang i ($v_i$) est dans le voisinage d'un sommet compris dans le complexe simplicial de rang i-1 ($K_{i-1}$) ; et
      - si aucun sommet du complexe simplicial de rang i ($K_i$) n'est dans le voisinage du sommet de rang i ($v_i$), incrémenter le rang de classe c, former le complexe simplicial de rang i ($K_i$) en ajoutant, au complexe simplicial de rang i-1 ($K_{i-1}$), une nouvelle classe ($C_c$) composée du sommet de rang i ($v_i$) et affecter à la nouvelle classe ($C_c$) le rang c ;
      - si au moins un sommet d'une unique classe du complexe simplicial de rang i ($K_i$) est dans le voisinage du sommet de rang i ($v_i$), former le complexe simplicial de rang i ($K_i$) en ajoutant, au complexe simplicial de rang i-1 ($K_{i-1}$), le sommet de rang i ($v_i$) dans cette unique classe ;
      - si plusieurs sommets d'une pluralité de classes du complexe simplicial de rang i ($K_i$) sont dans le voisinage du sommet de rang i ($v_i$), former le complexe simplicial de rang i ($K_i$) en regroupant entre eux, dans le complexe simplicial de rang i-1 ($K_{i-1}$), les sommets formant cette pluralité de classes et le sommet de rang i ($v_i$) dans la classe de rang le plus faible et former une paire de persistance comprenant :

         i. le premier sommet ($v_{ic}$) correspondant au sommet de rang le plus petit dans la classe de rang le plus faible de la pluralité de classes du complexe simplicial de rang i ($K_i$), ce rang étant appelé rang d'apparition de la paire de persistance (ic);
         ii. le second sommet ($v_{id}$) correspondant au sommet de rang d'indice i ($v_i$), ce rang i étant appelé rang de disparition de la paire de persistance (id);

      - dans une étape de décimation, calculer, pour chaque paire de persistance ($v_{ic}$, $v_{id}$) identifiée, la durée de vie associée à la paire de persistance ($v_{ic}$, $v_{id}$) calculée comme la différence entre le rang de disparition de la paire de persistance (id) et le rang d'apparition de la paire de persistance (ic), et retenir dans une liste restreinte une partie des paires de persistance ($v_{ic}$, $v_{id}$) présentant les durées de vie les plus grandes ; l'image numérique encodée comprenant certains au moins des pixels ($p_{ij}$) correspondant aux sommets constituant les paires de persistance ($v_{ic}$, $v_{id}$) de la liste restreinte.

2. Procédé d'encodage selon la revendication précédente, dans lequel d'ordonnancement comprend l'application d'une règle de discrimination pour ordonner, dans la table, deux sommets présentant la même valeur scalaire d'intensité.

3.  Procédé d'encodage selon l'une des revendications précédentes, dans lequel un premier sommet $v_1$, correspondant à un point d'indices $i_1$, $j_1$ de l'image numérique, est dans le voisinage d'un second sommet $v_2$, correspondant à un point d'indices $i_2$, $j_2$ de l'image numérique, si $i_1=i_2+1$ et/ou si $j_1=j_2+1$.

4.  Procédé d'encodage selon l'une des revendications précédentes, dans lequel la valeur scalaire d'intensité ($f_{ij}$) de l'image numérique résulte de la combinaison d'une pluralité d'intensités de couleur d'une image brute couleur.

5.  Procédé d'encodage selon l'une des deux revendications précédentes, comprenant de plus la détermination d'une pluralité de triangles à partir de des sommets de triangulation.

6.  Programme d'ordinateur comprenant des instructions adaptées à la mise en œuvre par un ordinateur de chacune des étapes du procédé d'encodage selon l'une des revendications précédentes, lorsque le programme est exécuté sur l'ordinateur.

7.  Encodeur configuré pour mettre en œuvre le procédé d'encodage selon l'une des revendications précédentes.

**Patentansprüche**

1.  Verfahren zum Codieren eines digitalen Bildes, das aus einer Menge von N Pixeln ($p_{ij}$) besteht, um dasselbe zu komprimieren, wobei das digitale Bild als eine Wolke aus N Punkten (i, j, $f_{ij}$) definiert ist, die als Scheitelpunkte ($v_k$) bezeichnet werden, die die N Pixel ($p_{ij}$) mit einer skalaren Intensitätswert ($f_{ij}$) verbinden, wobei das Verfahren die folgenden Schritte umfasst:

    a) Anordnung der N Scheitelpunkte ($v_k$) in aufsteigender Reihenfolge der skalaren Intensitätswerte ($f_{ij}$) in einer Scheitelpunkttabelle;
    b) Bildung einer Filterung der Punktwolke, die aus einer Reihe von M Simplizialkomplexen ($K_i$) besteht, wobei jeder Simplizialkomplex einer Datenstruktur entspricht, die eine Vielzahl von Scheitelpunkten ($v_k$) miteinander verbindet, wobei die Filterung derart erfolgt, dass die Vielzahl von Scheitelpunkten ($v_k$), die durch einen Simplizialkomplex ($K_i$) mit einem bestimmten Rang verbunden sind, auch in den Simplizialkomplexen verbunden sind, die jeweils höhere Ränge als den bestimmten Rang aufweisen, Schritt, in dem ein Iterationsindex i und ein Klassenindex c auf 0 initialisiert werden, ein Start-Simplizialkomplex ($K_0$) mit der leeren Menge initialisiert wird und die Abfolge der folgenden Operationen wiederholt wird, bis der Iterationsindex i N erreicht:

    Erhöhung des Iterationsindexes i;
    Extraktion des Scheitelpunkts des Ranges i ($v_i$) aus der Scheitelpunkttabelle und Überprüfung, ob der Scheitelpunkt des Ranges i ($v_i$) in der Nachbarschaft eines Scheitelpunkts liegt, der im Simplizialkomplex des Ranges i-1 ($K_{i-1}$) enthalten ist; und
    wenn kein Scheitelpunkt des Simplizialkomplexes des Ranges i ($K_i$) in der Nachbarschaft des Scheitelpunkts des Ranges i ($v_i$) liegt, Erhöhung des Ranges der Klasse c, Bildung des Simplizialkomplexes des Ranges i ($K_i$) durch Hinzufügen einer neuen Klasse ($C_c$), bestehend aus dem Scheitelpunkt des Ranges i ($v_i$), zum Simplizialkomplex des Ranges i-1 ($K_{i-1}$), und Zuweisung des Ranges c zur neuen Klasse ($C_c$);
    wenn mindestens ein Scheitelpunkt einer einzigen Klasse des Simplizialkomplexes des Ranges i ($K_i$) in der Nachbarschaft des Scheitelpunkts des Ranges i ($v_i$) liegt, Bildung des Simplizialkomplexes des Ranges i ($k_i$) durch Hinzufügen des Scheitelpunkts des Ranges i ($v_i$) in dieser einzigen Klasse zum Simplizialkomplex des Ranges i-1 ($K_{i-1}$);
    wenn mehrere Scheitelpunkte einer Vielzahl von Klassen des Simplizialkomplexes des Ranges i ($K_i$) in der Nachbarschaft des Scheitelpunkts des Ranges i ($v_i$) liegen, Bildung des Simplizialkomplexes des Ranges i ($K_i$) durch Gruppierung der Scheitelpunkte, die diese Vielzahl von Klassen bilden, und des Scheitelpunkts des Ranges i ($v_i$) in der Klasse des niedrigsten Ranges miteinander im Simplizialkomplex des Ranges i-1 ($K_{i-1}$) und Bildung eines Persistenzpaares, umfassend:

    i. der erste Scheitelpunkt ($v_{ic}$), der dem Scheitelpunkt des niedrigsten Ranges in der niedrigsten Rangklasse der Vielzahl von Klassen des Simplizialkomplexes des Ranges i ($K_i$) entspricht, wobei dieser Rang als Erscheinungsrang des Persistenzpaars (ic) bezeichnet wird;
    ii. der zweite Scheitelpunkt ($v_{id}$), der dem Scheitelpunkt des Indexranges i ($v_i$) entspricht, wobei dieser Rang i als Verschwinderang des Persistenzpaars (id) bezeichnet wird;

in einem Dezimierungsschritt, Berechnung der mit dem Persistenzpaar $(v_{ic}, v_{id})$ verbundenen Lebensdauer für jedes identifizierte Persistenzpaar $(v_{ic}, v_{id})$, berechnet als Differenz zwischen dem Verschwinderang des Persistenzpaars (id) und dem Erscheinungsrang des Persistenzpaars (ic), und Beibehalten eines Teils der Persistenzpaare $(v_{ic}, v_{id})$ mit den längsten Lebensdauern in einer eingeschränkten Liste;

wobei das codierte digitale Bild mindestens einige der Pixel $(p_{ij})$ umfasst, die den Scheitelpunkten entsprechen, die die Persistenzpaare $(v_{ic}, v_{id})$ der eingeschränkten Liste bilden.

2. Verfahren zum Codieren nach dem vorhergehenden Anspruch, wobei die Sortierung die Anwendung einer Unterscheidungsregel umfasst, um in der Tabelle zwei Scheitelpunkte mit demselben skalaren Intensitätswert zu ordnen.

3. Verfahren zum Codieren nach einem der vorhergehenden Ansprüche, wobei ein erster Scheitelpunkt $v_1$, der einem Punkt der Indize $i_1$, $j_1$ des digitalen Bildes entspricht, in der Nähe eines zweiten Scheitelpunkts $v_2$ liegt, der einem Punkt der Indize $i_2$, $j_2$ des digitalen Bildes entspricht, wenn $i_1=i_2+1$ und/oder wenn $j_1=j_2+1$.

4. Verfahren zum Codieren nach einem der vorhergehenden Ansprüche, wobei sich der skalare Intensitätswert $(f_{ij})$ des digitalen Bildes aus der Kombination einer Vielzahl von Farbintensitäten eines Rohfarbbildes ergibt.

5. Verfahren zum Codieren nach einem der beiden vorhergehenden Ansprüche, ferner umfassend das Bestimmen einer Vielzahl von Dreiecken aus Triangulationsscheitelpunkten.

6. Computerprogramm mit Anweisungen, die an die Implementierung jedes einzelnen Schritts des Verfahrens zum Codieren nach einem der vorhergehenden Ansprüche durch einen Computer angepasst sind, wenn das Programm auf dem Computer umgesetzt wird.

7. Encoder, der dazu konfiguriert ist, das Verfahren zum Codieren gemäß einem der vorhergehenden Ansprüche umzusetzen.

## Claims

1. A method for encoding a digital image formed from a set of N pixels $(p_{ij})$ with a view to compressing it; the digital image being defined as a cloud of N points $(i, j, f_{ij})$, designated vertices $(v_k)$, associating the set of N pixels $(p_{ij})$ with a scalar intensity value $(f_{ij})$, the method comprising the following steps:

a) arrange the N vertices $(v_k)$, in ascending order, by the values of scalar intensity $(f_{ij})$ in a vertex table;

b) form a filtration of the point cloud composed of a series of M simplicial complexes $(K_i)$, each simplicial complex corresponding to a data structure associating a plurality of vertices $(v_k)$ with each other, the filtering being such that the plurality of vertices $(v_k)$ associated with a simplicial complex $(K_i)$ exhibiting a determined rank are also associated with simplicial complexes exhibiting ranks higher than the determined rank, step in which an iteration index i and a class c index are initialized to 0, an initial simplicial complex $(K_0)$ is initialized to the empty set and the sequence of the following operations is repeated until the iteration index i reaches N:

- increase the iteration index i;
- extract the rank i vertex $(v_i)$ from the vertex table and check whether the rank i vertex $(v_i)$ is in the vicinity of a vertex included in the rank i-1 simplicial complex $(K_{i-1})$; and
- if no rank i simplicial complex vertex $(K_i)$ is in the vicinity of the rank i vertex $(v_i)$, increase the class rank c, form the rank i simplicial complex $(K_i)$ by adding, to the rank i-1 simplicial complex $(K_{i-1})$, a new class $(C_c)$ composed of the rank i vertex $(v_i)$ and assign to the new class $(C_c)$ the c rank;
- if at least one vertex of a unique class of the rank i simplicial complex $(K_i)$ is in the vicinity of the rank i vertex $(v_i)$, form the rank i simplicial complex $(k_i)$ by adding, to the rank i-1 simplicial complex $(K_{i-1})$, the rank i vertex $(v_i)$ in this unique class;
- if several vertices of a plurality of classes of the rank i simplicial complex $(K_i)$ are in the vicinity of the rank i vertex $(v_i)$, forming the rank i simplicial complex $(K_i)$ by grouping together, in the rank i simplicial complex-1 $(K_{i-1})$, the vertices forming this plurality of classes and the rank i vertex $(v_i)$ in the class of lowest rank and forming a persistence pair comprising:

i. the first vertex $(v_{ic})$ corresponding to the lowest rank vertex in the lowest rank class of the plurality of classes of the rank i simplicial complex $(K_i)$, this rank being called the appearance rank of the persistence pair (ic);

ii. the second vertex ($v_{id}$) corresponding to the index rank i vertex ($v_i$), where i is called the rank of disappearance of the persistence pair (id);

- in a decimation step, calculating, for each persistence pair ($v_{ic}$, $v_{id}$) identified, the lifetime associated with the persistence pair ($v_{ic}$, $v_{id}$) calculated as the difference between the disappearance rank of the persistence pair (id) and the appearance rank of the persistence pair (ic), and retaining in a shortlist some of the persistence pairs with ($v_{ic}$, $v_{id}$) the longest lifetimes;

the encoded digital image comprising at least some of the pixels ($p_{ij}$) corresponding to the vertices constituting the persistence pairs ($v_{ic}$, $v_{id}$) of the shortlist.

2. The encoding method according to the preceding claim, in which the ordering comprises the application of a discrimination rule to arrange, in the table, two vertices having the same scalar intensity value.

3. The encoding method according to one of the preceding claims, in which a first vertex $v_1$, corresponding to a point with indices $i_1$, $j_1$ of the digital image, is in the vicinity of a second vertex $v_2$, corresponding to a point with indices $i_2$, $j_2$ of the digital image, if $i_1 = i_2 + 1$ and/or if $j_1 = j_2 + 1$.

4. The encoding method according to one of the preceding claims, wherein the scalar intensity value ($f_{ij}$) of the digital image results from the combination of a plurality of color intensities of a raw color image.

5. The encoding method according to one of the two preceding claims, further comprising determining a plurality of triangles from triangulation vertices.

6. A computer program comprising instructions adapted to the implementation by a computer of each of the steps of the encoding method according to one of the preceding claims, when the program is executed on the computer.

7. The encoder configured to implement the encoding method according to one of the preceding claims.

[Fig. 1]

[Fig. 2]

[Fig. 3a]

[Fig. 3b]

[Fig. 3c]

[Fig. 3d]

[Fig. 3e]

[Fig. 4]

[Fig. 5]

i=0 ; C=0 ; K₀= ø

i=1 ; C=1 ; K₁= {C₁= {V₁}}

i=2 ; C=2 ; K₂= {C₁= {V₁}; C₂= {V₂}}   )U{V₂}  <u>Cas a</u>

)U{V₃}  <u>Cas b</u>

i=3 ; C=2 ; K₃= {C₁= {V₁,V₃}; C₂= {V₂}}

)U{V₄}  <u>Cas b</u>

i=4 ; C=2 ; K₄= {C₁= {V₁,V₃}; C₂= {V₂,V₄}}

)U{V₅}  <u>Cas b</u>

i=5 ; C=2 ; K₅= {C₁= {V₁,V₃}; C₂= {V₂,V₄,V₅}}

)U{V₆}  <u>Cas a</u>

i=6 ; C=3 ; K₆= {C₁= {V₁,V₃}; C₂= {V₂,V₄,V₅}; C₃= {V₆}}

)U{V₇}  <u>Cas b</u>

i=7 ; C=3 ; K₇= {C₁= {V₁,V₃,V₄}; C₂= {V₂,V₄,V₅}; C₃= {V₆}}

)U{V₈}  <u>Cas b</u>

i=8 ; C=3 ; K₈= {C₁= {V₁,V₃,V₄}; C₂= {V₂,V₄,V₅,V₉}; C₃= {V₆}}

)U{V₉}  <u>Cas c</u>

i=9 ;  C=2   K₉= {C₁= {V₁,V₃,V₄}; C₂= {V₂,V₄,V₅,  V₈,V₆,V₉ }}

$V_{ic} = V_2$
$V_{id} = V_9$

U{V₁₀}  <u>Cas c</u>

i=10 ; C=1 ; K₁₀= {C₁= {V₁,V₂..........V₁₀}}

$V_{ic} = V_1$
$V_{id} = V_{10}$

[Fig. 6]

$$Gx = \begin{matrix} -1 & 0 & 1 \\ -2 & 0 & 2 \\ -1 & 0 & 1 \end{matrix}$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. MARWOOD et al.** Representing image in 200 bytes : compression via triangulation. IEEE ICIP, 2018

- **H. EDELSBRUNNER** ; **J. HARER**. Computational Topology: An Introduction. AMS Press, 2009